# EUROPÄISCHE PATENTSCHRIFT

(11) **EP 4 169 584 B1**
(45) Veröffentlichungstag und Bekanntmachung des Hinweises auf die Patenterteilung: **07.08.2024**
(21) Anmeldenummer: 21203448.2
(22) Anmeldetag: 19.10.2021
(51) Int. Cl.: A62B 35/00, F16B 45/04

(54) **GURT ZUR PERSONENABSTURZSICHERUNG MIT EINEM BESCHLAGTEIL**
BELT WITH A CONNECTOR FOR PROTECTING A PERSON AGAINST FALLING
CEINTURE DE PROTECTION PERSONNELLE CONTRE LES CHUTES AVEC UN CONNECTEUR

(43) Veröffentlichungstag der Anmeldung: 26.04.2023
(73) Patentinhaber: Teufelberger Fiber Rope GmbH, 4600 Wels (AT)
(72) Erfinder: SECKLEHNER, Dominik, 4814 Neukirchen (AT); JOHRENDT, Patrick, 4623 Gunskirchen (AT)
(74) Vertreter: Schwarz & Partner Patentanwälte GmbH

(56) Entgegenhaltungen:
- EP-A1- 3 332 840
- EP-A1- 3 466 493
- US-A1- 2018 345 053

## Beschreibung

Die Erfindung betrifft einen Gurt zur Personenabsturzsicherung mit einem Beschlagteil und zumindest ein erstes und ein zweites körperteilumgreifendes Gurtunterelement, wobei das Beschlagteil eine Vorderseite und eine von der Vorderseite beabstandete Rückseite aufweist, wobei das Beschlagteil einen einstückig ausgebildeten Körper und einen Bolzen umfasst, wobei der Körper eine erste Öffnung zur Verbindung des Beschlagteils mit dem ersten Gurtunterelement, eine zweite Öffnung zur Verbindung des Beschlagteils mit dem zweiten Gurtunterelement, ein Brückenloch für eine Seilbrücke und gegebenenfalls eine dritte Öffnung zur Verbindung mit einem Anschlagpunkt aufweist, wobei die erste Öffnung, die zweite Öffnung, das Brückenloch und gegebenenfalls die dritte Öffnung das Beschlagteil jeweils in eine erste Richtung durchsetzen, welche von der Vorderseite zur Rückseite verläuft, und gesehen von der Vorderseite und/oder von der Rückseite vollständig vom Körper umschlossen sind.

Im Bereich der Personensicherung, insbesondere im Bereich der Baumpflege, werden Gurte eingesetzt, um Kletterer gegen Absturz zu sichern. Die Gurte umfassen in der Regel mehrere körperteilumgreifende Gurtunterelemente, wie beispielsweise einen Hüftgurt, Brustgurt und/oder Beinschlaufen. Die Gurtunterelemente sind mittels Beschlagteilen miteinander verbunden und es ist in der Regel möglich, weitere Elemente wie Seilbrücken an den Beschlagteilen zu befestigen. Üblicherweise wird ein Beschlagteil links und ein Beschlagteil rechts am Gurt vorgesehen und die Seilbrücke wird zwischen den Beschlagteilen befestigt, je nach Ausführung des Beschlagteils mittels Knoten oder Schlaufen an den Enden der Seilbrücke. Die Seilbrücke kann somit als Anschlagpunkt eingesetzt werden, z.B. in eine Sicherung eingehängt werden, und der Benutzer kann sich gesichert zurücklehnen.

Bekannt sind Ausführungsformen mit Schäkeln als Beschlagteile, wobei ein Verbindungsband des Hüftgurts, ein Verbindungsband der Beinschlaufe und ein Ende der Seilbrücke auf einen U-förmigen Körper des Schäkels gehängt wird. Der U-förmige Körper kann mittels eines Bolzens verschlossen werden, sodass die genannten Elemente auf dem Schäkel fixiert sind. Nachteilig ist bei diesen Ausführungsformen, dass beim Abnehmen des Bolzens alle Elemente freigegeben werden. Die Modularität dieser Ausführungsform, insbesondere in Bezug auf die Auswechselbarkeit der Seilbrücke, wird jedoch seit jeher als positive Eigenschaft angesehen.

Andere Beschlagteile werden als starrer Körper ausgeführt und weisen zwei voneinander gesonderte Öffnungen für das Verbindungsband des Hüftgurts bzw. für das Verbindungsband der Beinschlaufe auf. Weiters wird ein Brückenloch vorgesehen, in dem die Seilbrücke mittels eines Stopperknotens fixiert werden kann.

Eine aus der EP 3 332 840 A bekannte naheliegende Abwandlung sieht vor, das von den Schäkeln bekannte lösbare Befestigungselement mit einem ansonsten starren Beschlagteil zu verwenden. Um dies umzusetzen, wird eine knochenförmige Befestigungsleiste bzw. Anbauleiste außen über das Brückenloch geschraubt. Um dies vorzusehen, werden zwei weitere Löcher im Körper des Beschlagteils vorgesehen und die Befestigungsleiste wird mittels jeweils einer Schraube und einer Mutter in den Löchern fixiert. Diese Ausführungsform weist somit sechs Einzelteile auf und das Abnehmen der Befestigungsleiste erfordert viel Zeitaufwand. Da die Muttern und Schrauben zudem besonders klein sind, können diese bei Montage und/oder Demontage leicht verloren gehen.

Aus der EP 3 466 493 B1 ist ein Beschlagteil bekannt, das auf einer Seite mit einem Durchbruch versehen ist. In den Durchbruch kann ein Schließelement eingeführt werden, das die Form des Beschlagteils vervollständigt und eine Trennwand im Beschlagteil ersetzt. Das Schließelement trennt somit das Brückenloch von einer Öffnung für einen Anschlagpunkt. Nachteilig ist hier insbesondere, dass nach dem Herausnehmen des Schließelements sowohl das Brückenloch als auch die Öffnung für einen Anschlagpunkt gleichzeitig freigegeben werden. Weiters muss das Schließelement selbst ein Loch aufweisen, um dieses endseitig mit dem Beschlagteil zu verbinden. Durch das Loch stellt das Schließelement selbst einen Schwachpunkt dar. Diese Ausführungsform umfasst mindestens drei Einzelteile.

Es ist die Aufgabe der Erfindung, einen Gurt zur Personenabsturzsicherung zu schaffen, der robuster ist und mit weniger bzw. leichter montierbaren Einzelteilen ausgeführt werden kann.

Diese Aufgabe wird gelöst durch einen Gurt zur Personenabsturzsicherung umfassend ein Beschlagteil und zumindest ein erstes und ein zweites körperteilumgreifendes Gurtunterelement, wobei das Beschlagteil eine Vorderseite und eine von der Vorderseite beabstandete Rückseite aufweist, wobei das Beschlagteil einen einstückig ausgebildeten Körper und einen Bolzen umfasst, wobei der Körper eine erste Öffnung und gegebenenfalls eine zweite Öffnung zur Verbindung des Beschlagteils mit dem ersten Gurtunterelement und zur Verbindung des Beschlagteils mit dem zweiten Gurtunterelement, ein Brückenloch für eine Seilbrücke und gegebenenfalls eine dritte Öffnung zur Verbindung mit einem Anschlagpunkt aufweist, wobei die erste Öffnung, die zweite Öffnung, das Brückenloch und gegebenenfalls die dritte Öffnung das Beschlagteil jeweils in eine erste Richtung durchsetzen, welche von der Vorderseite zur Rückseite verläuft, und vollständig innerhalb der Vorderseite bzw. Rückseite liegen, wobei der Körper des Beschlagteils ferner ein Transversalloch aufweist, welches in einer zweiten Richtung normal zur ersten Richtung verläuft, und in einem vorbestimmten Abstand zur Vorderseite und zur Rückseite angeordnet ist, wobei ein erster Abschnitt des Transversalloches von einer ersten Seitenfläche des Körpers des Beschlagteils bis zum Brückenloch verläuft und ein zweiter Abschnitt des Transversalloches in Verlängerung des ersten Abschnittes ausgehend vom Brückenloch in Richtung einer der ersten Seitenfläche gegenüberliegenden zweiten Seitenfläche des Körpers des Beschlagteils verläuft, wobei der Bolzen in das Transversalloch führbar und in diesem arretierbar ist, um einen Steg innerhalb des Brückenloches zu bilden.

Dieser Gurt hat den Vorteil, dass das als Verbindungselement zwischen den Gurtunterelementen eingesetzte Beschlagteil eine besonders einfache Auswechslung der Brücke ermöglicht. Es muss nur ein Bolzen in den Körper des Beschlagteils eingeführt werden, ohne dass es weiterer Befestigungsschrauben oder dergleichen bedarf. Im allereinfachsten Fall kann das Beschlagteil nur aus dem Körper und dem Bolzen bestehen, sodass die Verlustgefahr von kleinteiligen Bestandteilen reduziert wird. Weiters kann auch die Geschwindigkeit der Auswechslung einer Brücke erhöht werden, da weniger Elemente miteinander verbunden werden müssen.

Gegenüber der EP 3 332 840 A besteht der Vorteil, dass erstens keine Befestigungsschrauben eingesetzt werden müssen. Zudem entfällt die Notwendigkeit, dass zwei zusätzliche Löcher für Befestigungsschrauben durch die Vorderseite bzw. Rückseite des Körpers des Beschlagteils gebohrt werden müssen. Weiters kann die Gesamtdicke des zusammengebauten Beschlagteils reduziert werden, da sich nun jener Teil, der das Brückenloch verkleinert, innerhalb des Brückenloches befinden kann und keine Befestigungsleiste außen auf den Körper des Beschlagteils aufgeschraubt werden muss, was die Dicke des Beschlagteils effektiv verdoppelt. Hinzu kommt, dass bei der Lösung der EP 3 332 840 A für verschiedene Arten von "Brücken" (geknotet, mit vernähter Schlaufe) verschiedene Ausführungen des abnehmbaren Teils notwendig sind. Diese Teile sind recht klein und gehen leicht verloren bzw. sind dann, wenn sie gebraucht werden, nicht zur Stelle.

Gegenüber der EP 3 466 493 B1 besteht der grundlegende Unterschied, dass nicht versucht wird, eine Zwischenwand des Körpers, die zwei wohldefinierte Öffnungen trennt, auswechselbar auszugestalten. Bei der EP 3 466 493 B1 soll die Trennwand zwischen dem Brückenloch und der dritten Öffnung modular ausgestaltet werden, was nicht Ziel der vorliegenden Erfindung ist. Erfindungsgemäß wird das Brückenloch selbst verjüngt. Die Erfindung hat gegenüber der EP 3 466 493 B1 die Vorteile, dass der Körper des Beschlagteils durchgehend, d.h. umlaufend und ohne Durchbruch, ausgestaltet werden kann, wohingegen bei der EP 3 466 493 B1 ein permanenter Durchbruch in der Seitenwand vorgesehen werden muss, um die dritte Öffnung zugänglich zu machen. Dieser Durchbruch schwächt die Integrität des Beschlagteils erheblich. Weiters besteht der Vorteil, dass die erfindungsgemäße Lösung mit weniger Einzelteilen auskommt, da insbesondere kein zusätzlicher Stift zur Sicherung eines Schließelements in das Beschlagteil eingeführt werden muss.

In einer bevorzugten Ausführungsform verläuft der zweite Abschnitt des Transversalloches vom Brückenloch bis zur zweiten Seitenfläche und durchsetzt die zweite Seitenfläche. Dies ermöglicht eine besonders einfache Fertigung und auch eine größere Länge des Bolzens, was zu einer verbesserten Kraftübertragung führt. Weiters kann ein Innengewinde im zweiten Abschnitt besonders einfach gefertigt werden, da der zweite Abschnitt einfacher zugänglich ist.

Alternativ zu der vorgenannten Ausführungsform kann der zweite Abschnitt des Transversalloches ein Sackloch sein. Dadurch kann die Stabilität des Körpers erhöht werden, da eine durchgehende Wandstärke an der zweiten Seitenfläche erzielbar ist.

Im Allgemeinen bestehen mehrere Möglichkeiten, um den Bolzen im Transversalloch zu arretieren. Einerseits könnte der Bolzen länger als das Transversalloch ausgeführt werden und eine Mutter könnte auf einem Ende oder beiden der Enden außen auf den Bolzen geschraubt werden, um diesen im Transversalloch bzw. am Körper zu arretieren. Bevorzugt wird jedoch, wenn zumindest der zweite Abschnitt des Transversalloches mit einem Innengewinde versehen ist und der Bolzen ein gegengleiches Außengewinde aufweist. Dadurch kann der Bolzen besonders einfach in das Transversalloch geschraubt und in diesem arretiert werden, ohne dass es zusätzlicher Elemente bedarf. Das Innengewinde im Transversalloch kann besonders bevorzugt durch eine in das Transversalloch eingeklebte Mutter mit Innengewinde ausgebildet sein.

Besonders kompakt ist das Beschlagteil zudem, wenn der Bolzen im montierten Zustand im Wesentlichen bündig mit der ersten Seitenfläche abschließt, wenn dieser vollständig in das Transversalloch eingeführt ist, und wobei der Bolzen bevorzugt eine stirnseitige Vertiefung für den Angriff eines Werkzeuges aufweist. Dadurch kann ein sehr kompaktes System erzielt werden, da sich der Bolzen im eingebauten Zustand vollständig innerhalb des Körpers befinden kann. Gleichzeitig kann der Bolzen durch die Vertiefung für das Werkzeug weiterhin einfach montiert und demontiert werden.

Als besonders vorteilhaft hat sich bewährt, wenn der Körper eine Dicke, gemessen von der Vorderseite zur Rückseite außerhalb einer lokalen Verstärkung für das Transversalloch, von 6 mm bis 14 mm, bevorzugt von 8 mm bis 10 mm, aufweist. Weiters bevorzugt hat das Transversalloch einen Durchmesser von 4 mm bis 10 mm, bevorzugt von 6 mm bis 8 mm.

Je nach Ausführung des Körpers bzw. des Transversalloches kann es dazu kommen, dass das Transversalloch ohne weitere Maßnahmen lokale Schwächungen hervorrufen kann, da die Wandstärke zwischen Transversalloch und Vorderseite bzw. Rückseite reduziert wird. Um diesen Effekt zu vermindern bzw. zu überwinden, kann das Beschlagteil im Bereich des Transversalloches eine Verstärkung aufweist. Insbesondere kann die Verstärkung durch eine lokale Erhöhung der Dicke gebildet sein, gemessen in der ersten Richtung, wobei die Dicke im Bereich des Transversalloches bevorzugt 15 mm bis 25 mm beträgt. Ein derart hergestelltes Beschlagteil erfüllt alle Anforderungen, die an derartige Beschlagteile für Gurte zur Personenabsturzsicherung gestellt werden.

Zwar könnte der hierin beschriebene Gurt für alle möglichen Anwendungszwecke eingesetzt werden, jedoch ist der Einsatzzweck als Klettergurt besonders bevorzugt. In diesem Fall ist das erste Gurtunterelement ein Hüftgurt und das zweite Gurtunterelement ist eine Beinschlaufe, wobei üblicherweise ein erstes Band des Hüftgurts durch die erste Öffnung und ein zweites Band der Beinschlaufe durch die zweite Öffnung geführt ist. In der Regel wird dieser Gurt eine weitere Beinschlaufe und ein weiteres Beschlagteil aufweisen, das bevorzugt wie das erstgenannte Beschlagteil mit Transversalloch oder gemäß dem Stand der Technik ausgebildet sein kann. Auch hier wird üblicherweise ein Band des Hüftgurts durch eine erste Öffnung des weiteren Beschlagteils und ein zweites Band der weiteren Beinschlaufe durch eine zweite Öffnung des weiteren Beschlagteils geführt.

Die Brücke kann beispielsweise gemäß einer der folgenden Ausführungen am Beschlagteil befestigt sein. In der ersten bevorzugten Ausführungsform ist die Brücke eine Seilbrücke, umfassend ein Seil, zwei Seile oder mehr als zwei Seile, und ein Ende der Seilbrücke ist durch das Brückenloch geführt und zu einem Stopperknoten verknotet, wobei der Bolzen durch das Transversalloch geführt ist und den Stopperknoten daran hindert, das Brückenloch zu durchsetzen. In dieser Ausführungsform schafft der Bolzen eine erhöhte Sicherheit, da der Stopperknoten nicht durch das Brückenloch rutschen kann. Wenn die Seilbrücke zwei oder mehr Seile umfasst, kann der Stopperknoten dadurch gebildet werden, dass ein einziger, gemeinsamer Knoten auf das Bündel von Seilen geknotet wird oder dadurch, dass einzelne Knoten auf jedes der Seile geknotet werden.

In der zweiten bevorzugten Ausführungsform ist die Brücke eine Seilbrücke, umfassend ein Seil, zwei Seile oder mehr als zwei Seile, und ein Ende der Seilbrücke ist permanent als Schlaufe ausgebildet, bevorzugt durch Zurückbiegen und Vernähen eines Endes der Seilbrücke, wobei der Bolzen durch die Schlaufe und das Transversalloch geführt ist. Hierfür wird der Bolzen zuerst durch den ersten Abschnitt des Transversalloches, dann durch die Schlaufe und daraufhin durch den zweiten Abschnitt des Transversalloches geführt.

In der dritten bzw. vierten bevorzugten Ausführungsform ist die Brücke als Gurtband ausgeführt und ein Ende des Gurtbandes ist permanent als Schlaufe ausgebildet, bevorzugt durch Zurückbiegen und Vernähen eines Endes eines einzeln geführten Gurtes oder im Faltbereich eines einstückigen, doppelt geführten Gurtes, wobei der Bolzen durch die Schlaufe und das Transversalloch geführt ist. Hierfür wird der Bolzen zuerst durch den ersten Abschnitt des Transversalloches, dann durch die Schlaufe und daraufhin durch den zweiten Abschnitt des Transversalloches geführt.

Die drei letztgenannten Ausführungsformen zeichnen sich dadurch aus, dass die Brücke an den Enden durch einfaches Einschieben eines Bolzens durch eine im Brückenloch befindliche Schlaufe der Brücke am Beschlagteil befestigt werden kann.

Die hierin beschriebene Brücke kann an ihren beiden Enden gleich ausgestaltet sein und auf die gleiche Art und Weise mit jeweils einem Beschlagteil verbunden sein. Alternativ könnte die Brücke an ihren beiden Enden auch unterschiedlich ausgeführt sein und beispielsweise an einem Ende mit einem Stopperknoten am Beschlagteil befestigt sein und am anderen Ende mit einer Schlaufe, durch die der Bolzen geführt ist.

Grundsätzlich könnte nur die erste Öffnung vorgesehen werden, und sowohl ein Band des ersten Gurtelements als auch ein Band des zweiten Gurtelements wird durch die gemeinsame erste Öffnung geführt. Bevorzugt ist jedoch, wenn die erste Öffnung und die zweite Öffnung getrennt voneinander ausgeführt sind, wobei ein erstes Band des Hüftgurts durch die erste Öffnung und ein zweites Band der Beinschlaufe durch die zweite Öffnung geführt ist. Dies hat den Vorteil, dass sich die Bänder der beiden Gurtelemente nicht berühren und dadurch auch keine unbeabsichtigte Abnutzung durch Scheuern aneinander entstehen kann.

Vorteilhafte und nicht einschränkende Ausführungsformen der Erfindung werden nachfolgend anhand der Zeichnungen näher erläutert.
Figur 1 zeigt einen Gurt zur Personenabsturzsicherung nach dem Stand der Technik.
Die Figuren 2a und 2b zeigen das Beschlagteil eines erfindungsgemäßen Gurtes in einer Draufsicht (Figur 2a) und in einer Seitenansicht (Figur 2b).
Die Figuren 3a und 3b zeigen das Beschlagteil der Figuren 2a und 2b in einer ersten Verwendung in einer Draufsicht (Figur 3a) und in einer Seitenansicht (Figur 3b).
Die Figuren 4a und 4b zeigen das Beschlagteil der Figuren 2a und 2b in einer zweiten Verwendung in einer Draufsicht (Figur 4a) und in einer Seitenansicht (Figur 4b).
Die Figuren 5a und 5b zeigen das Beschlagteil der Figuren 2a und 2b in einer dritten Verwendung in einer Draufsicht (Figur 5a) und in einer Seitenansicht (Figur 5b).
Die Figuren 6a und 6b zeigen das Beschlagteil der Figuren 2a und 2b in einer vierten Verwendung in einer Draufsicht (Figur 6a) und in einer Seitenansicht (Figur 6b).
Die Figuren 7a bis 7d zeigen sequentiell das Einführen des Bolzens durch das Transversalloch des Körpers des Beschlagteils bzw. durch eine Schlaufe der Brücke.

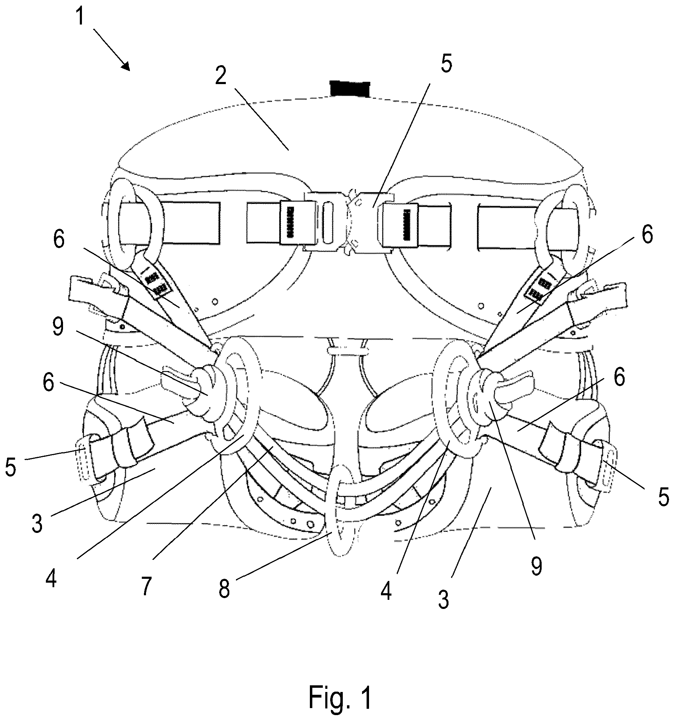

Figur 1 zeigt einen Gurt 1 zur Personenabsturzsicherung, der in der dargestellten Ausführungsform als Klettergurt, auch als Sitzgurt bzw. Haltegurt bezeichnet, ausgebildet ist. Dieser Gurt 1 umfasst einen Hüftgurt 2 und zwei Beinschlaufen 3, die mit dem Hüftgurt 2 über Beschlagteile 4 verbunden sind. Die Erfindung ist jedoch nicht auf diese konkrete Ausführungsform beschränkt, sondern der Gurt könnte beispielsweise auch weitere bzw. andere Elemente wie einen Brustgurt umfassen, in welchem Fall der Gurt als Auffanggurt bezeichnet werden könnte. Im Allgemeinen werden die Elemente wie der Hüftgurt 2, die Beinschlaufen 3 oder ein Brustgurt als körperteilumgreifende Gurtunterelemente bezeichnet.

Die Gurtunterelemente sind in der Regel als Gurtbänder ausgeführt, deren Enden mit einer Schnalle 5 verbunden werden, um das Gurtband zu einer Schlaufe zu formen, die um ein Körperteil gelegt werden kann, wie in Figur 1 dargestellt ist. Durch eine Längeneinstellvorrichtung im Bereich der Schnalle 5 können die Gurtunterelemente größenverstellbar ausgestaltet werden. Derartige Ausführungsformen können sowohl für den Hüftgurt 2 als auch für die Beinschlaufen 3 vorgesehen werden. In der Regel sind die Gurtunterelemente aus textilem Material gefertigt und können beispielsweise mit einem verstärkenden Lederteil versehen sein.

Um die Gurtunterelemente miteinander bzw. mit den Beschlagteilen 4 zu verbinden und dabei eine gute Kraftübertragung zu ermöglichen, weisen die Gurtunterelemente üblicherweise Bänder 6 auf, die z.B. durch das gesamte Gurtunterelement verlaufen. Durch diese Lösungen wird insbesondere eine gute Kraftübertragung zwischen den Bändern eines Gurtunterelements und dem Körper eines Benutzers erzielt. Die Bänder 6 werden üblicherweise durch Öffnungen der Beschlagteile 4 geführt und anschließend zu einer Schlaufe vernäht, wodurch die Gurtunterelemente mittels der Befestigungselemente 4 miteinander verbunden sind. Die gegenseitige Verbindung der Gurtunterelemente über die Beschlagteile 4 ist somit üblicherweise unlösbar bzw. nur mit Werkzeug lösbar ausgestaltet.

Die Beschlagteile 4 bilden somit einen Verbindungspunkt zwischen den Gurtunterelementen. Damit können die Beschlagteile 4 gleichzeitig einen Kraftübertragungspunkt zwischen dem Körper des Benutzers des Gurts 1 und einem Anschlagpunkt bilden, an dem der Benutzer des Gurtes 1 gesichert werden soll. Um eine gleichmäßige Kraftübertragung zu ermöglichen, wird üblicherweise ein Beschlagteil 4 links und ein Beschlagteil 4 rechts am Gurt 1 vorgesehen wird und es wird eine flexible Brücke 7 (wie eines oder mehrere Seile oder ein Gurtband) zwischen den Beschlagteilen 4 eingehängt. Die Brücke 7 kann in der Folge an einem Anschlagpunkt befestigt werden, was dadurch erleichtert werden kann, wenn sich ein Ring 8 auf der Brücke zwischen den Beschlagteilen 4 befindet.

Wie aus dem Stand der Technik hinlänglich bekannt, soll die Brücke 7 auswechselbar bzw. längenveränderbar ausgestaltet sein, damit die Länge der Brücke 7 an den jeweiligen Einsatzzweck angepasst werden kann. Im einfachsten Fall, wie in Figur 1 gezeigt, ist das Beschlagteil 4 als starres Element ausgebildet, das ein Brückenloch aufweist, durch welches die als Seil ausgeführte Brücke 7 geführt wird. Die Brücke 7 wird in diesem Brückenloch fixiert, indem die Brücke an den Enden verknotet wird, siehe die Knoten 9 in Figur 1. Die Länge kann durch die Positionierung des Knotens angepasst werden.

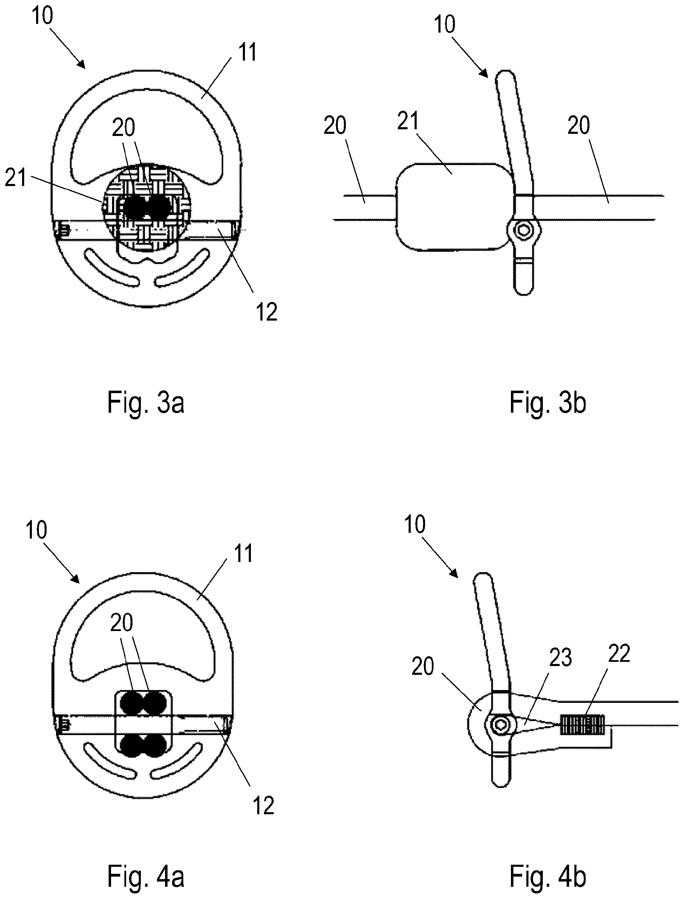

Erfindungsgemäß soll die Anbindung der Brücke 7 an das Beschlagteil 4 jedoch erleichtert werden. Aus diesem Grund wird ein Gurt vorgesehen, der wie der oben beschriebene Gurt 1 ausgeführt sein kann, wobei die starren Beschlagteile 4 durch erfindungsgemäße Beschlagteile 10 ersetzt werden. Gegebenenfalls kann die Brücke 7 beibehalten oder anders ausgeführt werden, siehe die Figuren 3a bis 6b. Alle oben für den Gurt 1 beschriebenen Ausführungsvarianten können daher auch für den erfindungsgemäßen Gurt eingesetzt werden. Die Bezeichnungen und Bezugszeichen für die Bestandteile des Gurtes wie die Gurtunterelemente, insbesondere den Hüftgurt 2 und die Beinschlaufen 3, die Schnalle 5 (sowohl für den Hüftgurt 2 als auch für die Beinschlaufen 3) und die Bänder 6 werden daher auch für den erfindungsgemäßen Gurt beibehalten.

Das erfindungsgemäße Beschlagteil 10 umfasst einen einstückig ausgebildeten Körper 11 und einen gegenüber dem Körper 11 arretierbaren Bolzen 12. Der Körper 11 wird über die Bänder 6 unlösbar bzw. nur mit Werkzeug lösbar mit den Gurtunterelementen verbunden und die Brücke 7 wird wie unten näher erläutert am Bolzen 12 befestigt bzw. der Bolzen 12 verhindert, dass ein Stopperknoten der Brücke 7 durch eine Öffnung im Beschlagteil 10 hindurchtritt. Dadurch kann die Brücke 7 mit Stopperknoten am Gurt 1 befestigt werden, wenn der Bolzen 12 am Körper 11 arretiert wird, und die Brücke 7 mit Schlaufen kann vom Gurt gelöst werden, wenn der Bolzen 12 vom Körper 11 gelöst wird. Der einstückige Körper 11 besteht beispielsweise aus Metall. Der Bolzen 12 ist beispielsweise ein Metallstift.

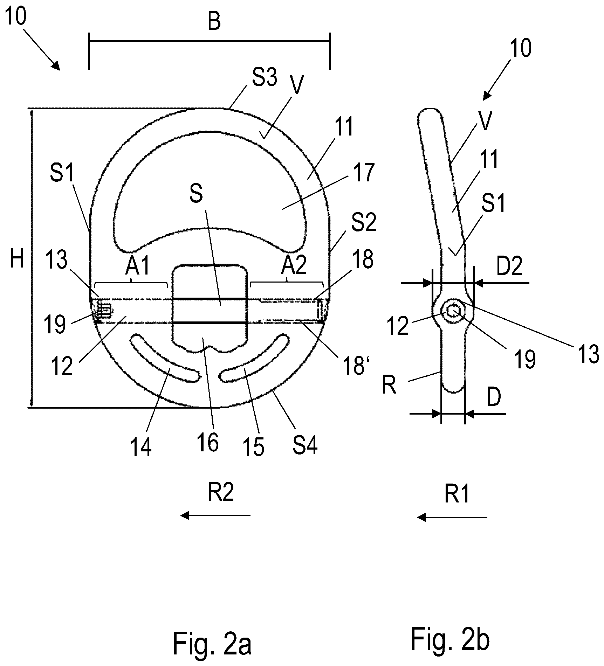

Um diese Funktionalität zu erzielen, weist der Körper 9 erfindungsgemäß ein Transversalloch 13 zur Einführung des Bolzens 12 auf, wie im Folgenden anhand der Figuren 2a und 2b dargestellt ist. Insbesondere Figur 2a zeigt, dass der Körper 11 eine erste Öffnung 14 zur Verbindung des Beschlagteils 10 mit dem ersten Gurtunterelement und eine zweite Öffnung 15 zur Verbindung des Beschlagteils 10 mit dem zweiten Gurtunterelement aufweist. Über die erste bzw. zweite Öffnung 14, 15 wird das Beschlagteil 10 somit unlösbar bzw. nur mit Werkzeug lösbar mit den Gurtunterelementen verbunden. Insbesondere können die Bänder 6 der jeweiligen Gurtunterelemente durch die erste bzw. zweite Öffnung 14, 15 geführt werden. Da die Bänder 6 üblicherweise eine flache Form aufweisen, werden die Öffnungen 14, 15 üblicherweise wie dargestellt länglich ausgebildet, damit die Bänder 6 passend in den Öffnungen 14, 15 zu liegen kommen. Diese Form der Öffnungen 14, 15 ist jedoch nicht zwingend. Überdies könnten die beiden Öffnungen 14, 15 auch als ein einziges Loch ausgebildet werden, durch das beide Bänder 6 der beiden Gurtunterelemente geführt werden.

Weiters weist das Beschlagteil 10 ein Brückenloch 16 auf, durch welches die Brücke 7 geführt werden soll. Die Form des Brückenloches 16 ist im Wesentlichen beliebig, beispielsweise wie dargestellt rechteckig mit abgerundeten Eckbereichen, wobei diese Form jedoch auch rund, oval oder anders ausgebildet sein kann.

Optional weist das Beschlagteil 10 ferner eine dritte Öffnung 17 zur Verbindung mit einem weiteren Anschlagpunkt auf. Beispielsweise kann ein Karabiner eines Verbindungsmittels in die dritte Öffnung 17 eingehängt werden.

Wie in den Figuren 2a und 2b weiter dargestellt, ist der Körper 11 als im Wesentlichen flächiges Element ausgebildet, d.h. der Körper 11 weist eine Dicke D auf, die kleiner ist als seine Breite B und seine Höhe H. Der Körper 11 hat beispielsweise eine Dicke D von 6 mm bis 14 mm, bevorzugt von 8 mm bis 10 mm. Gegebenenfalls weist der Körper 11 jedoch eine lokal erhöhte Dicke D2 für das Transversalloch 13 auf, wie unten beschrieben, wobei der Körper jedoch auch trotz der lokal erhöhten Dicke D2 als flächiges Element angesehen wird. Die vorgenannte Dicke D wird somit außerhalb der lokalen Verstärkung mit Dicke D2 gemessen.

Der Körper 11 weist somit eine Vorderseite V und eine der Vorderseite V gegenüberliegende Rückseite R auf. Die Vorderseite V und die Rückseite R bilden die flächenmäßig größten Seiten des Körpers 11. Die Vorderseite V und die Rückseite R sind durch Seitenflächen S1, S2, S3, S4 voneinander beabstandet. Wie dargestellt können die Seitenflächen S1 bis S4 stetig ineinander übergehen und gekrümmt sein. In der Draufsicht von Figur 2a, d.h. aus der weiter unten definierten ersten Richtung R1, bilden die Seitenflächen S1 bis S4 eine umlaufende Kontur. Im Allgemeinen liegen die erste und die zweite Seitenfläche S1, S2 bzw. die dritte und die vierte Seitenfläche S3, S4 im Wesentlichen gegenüber.

Figur 2b zeigt, dass der flächige Körper 11 auch gekrümmt sein kann, d.h. einen Knick aufweisen kann, was das Wesen der Erfindung jedoch nicht berührt. In anderen Varianten könnte der Körper 11 auch eben ausgebildet sein.

Anhand der Flächen V, R und S1 bis S4 können nun Richtungen R1, R2 definiert werden. Die erste Richtung R1 ist die Richtung von der Vorderseite V zur Rückseite R. Die vorgenannte erste Öffnung 14, zweite Öffnung 15, das Brückenloch 16 und die dritte Öffnung 17 berühren sich nicht und durchsetzen den Körper 11 in der ersten Richtung R1. Weiters kann eine zweite Richtung R2 definiert werden, in welcher sich das Transversalloch 13 erstreckt. Die zweite Richtung R2 liegt normal zur ersten Richtung R1. Bevorzugt liegt die zweite Richtung R2 auch normal zu einer Symmetrieebene, um welche das Brückenloch 16 und die dritte Öffnung 17 bzw. die erste und die zweite Öffnung 14, 15 symmetrisch angeordnet sein können, wie in Figur 2a gezeigt. Es versteht sich jedoch, dass das Beschlagteil 10 nicht symmetrisch ausgeführt werden muss bzw. das Transversalloch 13 in einem nicht-normalen Winkel zu einer Symmetrieebene gelegt werden könnte.

Hervorzuheben ist, dass weder die erste Öffnung 14, die zweite Öffnung 15, das Brückenloch 16 noch die dritte Öffnung 17, falls vorhanden, unmittelbar an eine der Seitenflächen S1 bis S4 angrenzt, d.h. alle Durchtritte 14 bis 17 sind in einem vorbestimmten Abstand > 0 zu den Seitenflächen S1 bis S4 angeordnet. Dadurch liegen alle Durchtritte 14 bis 17 vollständig innerhalb der Vorderseite V bzw. der Rückseite R.

Bei diesem Körper 11 soll der Bolzen 12 nun derart angeordnet werden, dass er das Brückenloch 16 durchsetzt, um einen Steg S innerhalb des Brückenlochs 16 zu bilden, wobei der Steg S das Brückenloch 16 beispielsweise in zwei gleich große Teile unterteilt. Zu diesem Zweck wird das vorgenannte Transversalloch 13 vorgesehen, welches sich in der zweiten Richtung R2 erstreckt. Das Transversalloch 13 ist in einem vorbestimmten Abstand > 0 zur Vorderseite V und zur Rückseite R angeordnet, d.h. berührt die Vorderseite V und die Rückseite R nicht und liegt bevorzugt mittig zwischen der Vorderseite V und der Rückseite R.

Das Transversallloch 13 verläuft derart im Körper 11, dass es das Brückenloch 16 und bevorzugt nur durch das Brückenloch 16 kreuzt. Wie in Figur 2a dargestellt befinden sich die erste und die zweite Öffnung 14, 15 auf einer Seite des Transversalloches 13 und die dritte Öffnung 17 befindet sich auf der anderen Seite des Transversalloches 13. Die Erfindung ist jedoch nicht auf diese Ausführungsform eingeschränkt, denn das Transversalloch 13 könnte auch derart angeordnet sein, dass die erste Öffnung 14 auf einer Seite des Transversalloches 13 liegt und die zweite Öffnung 15 auf der anderen Seite des Transversalloches 13 liegt. Hier könnte das Transversalloch 13 die dritte Öffnung 17 durchsetzen oder vor dieser stoppen, wenn das Transversalloch 13 als Sackloch ausgebildet ist. Die dritte Öffnung 17 könnte auch entfallen oder derart angeordnet sein, dass sie nicht das Transversalloch 13 kreuzt.

Um den Bolzen 12 stabil im Körper 11 zu halten, soll das Transversalloch 13 das Brückenloch 16 beidseitig durchsetzen, d.h. das Transversalloch 13 weist einen ersten Abschnitt A1 und einen zweiten Abschnitt A2 auf, die koaxial zueinander angeordnet sind. Das Brückenloch 16 beabstandet den ersten Abschnitt A1 vom zweiten Abschnitt A2. Der erste Abschnitt A1 verläuft von der ersten Seitenfläche S1 bis zum Brückenloch 16, sodass der Bolzen 12 an der ersten Seitenfläche S1 in das Transversalloch 13 eingeführt und durch das Brückenloch 16 geschoben werden kann. Der zweite Abschnitt A2 verläuft in Verlängerung des ersten Abschnittes A1 ausgehend vom Brückenloch 16 in Richtung der zweiten Seitenfläche S2, die der ersten Seitenfläche S1 gegenüberliegt. Der zweite Abschnitt A2 muss nicht, kann aber, bis zur Seitenfläche S2 verlaufen und diese durchsetzen. Der zweite Abschnitt A2 könnte somit auch als Sackloch ausgebildet sein.

Das Transversalloch 13 hat in der Regel einen Innendurchmesser, der dem Außendurchmesser des Bolzens 12 entspricht. Dadurch kann der Bolzen 12 passend in das Transversalloch 13 eingeführt werden. Üblicherweise haben sowohl der Bolzen 12 als auch das Transversalloch 13 einen runden Querschnitt normal zur zweiten Richtung R2 und sind daher zylindrisch ausgebildet, was jedoch nicht zwingend ist. Beispielsweise hat das Transversalloch 13 einen kreisrunden Querschnitt mit einem Innendurchmesser von 4 mm bis 10 mm, bevorzugt von 6 mm bis 8 mm. Insbesondere der Bolzen 12 muss jedoch keinen einheitlichen Außendurchmesser aufweisen, sondern könnte beispielsweise im Bereich des Brückenloches 16 einen geringeren Durchmesser aufweisen als an den außenliegenden Bereichen, die am ersten Abschnitt A1 bzw. zweiten Abschnitt A2 im Transversalloch 13 anliegen.

Um die Brücke 7 sicher zu halten, soll der Bolzen 12 im Transversalloch 13 arretiert werden, d.h. der Bolzen 12 soll derart im Transversalloch 13 befestigt werden, dass er nicht entlang der zweiten Richtung R2 aus dem Transversalloch 13 bewegt werden kann. Eine Rotation des Bolzens 12 um seine Achse könnte jedoch zugelassen werden. Durch das Arretieren kann der Bolzen 12 den Steg S innerhalb des Brückenloches 16 bilden, auf dem die Brücke 7 befestigbar ist, beispielsweise, mittels einer Schlaufe oder eines Stopperknotens, wie unten näher beschrieben ist.

Das Arretieren des Bolzens 12 im Transversalloch 13 kann auf unterschiedliche Arten erfolgen. Wie in Figur 2a gezeigt kann der Bolzen beispielsweise zumindest abschnittsweise ein Außengewinde 18 aufweisen, das mit einem Innengewinde 18' des Transversalloches 13 zusammenwirkt. Im dargestellten Beispiel weist der zweite Abschnitt A2 das Innengewinde 18' auf und der Bolzen 12 weist an jenem Ende, das im montierten Zustand im zweiten Abschnitt A2 zu liegen kommt, das Außengewinde 18 auf. Der erste Abschnitt A1 bzw. der Rest des Bolzens 12 ist frei von Gewinde, damit der Bolzen 12 leicht in das Transversalloch 13 gesteckt werden kann. Optional könnte jedoch auch der erste Abschnitt A1 bzw. der Teil des Bolzens 12, der am ersten Abschnitt A1 liegt, mit einem Gewinde versehen sein. Zusätzlich kann der Bolzen 12 mittels eines Gummi-O-Rings gegen unbeabsichtigtes Lösen gesichert sein. Der O-Ring kann sich beispielsweise auf jener Seite des Bolzens befinden, die im eingesetzten Zustand des Bolzens 12 am ersten Abschnitt A1 zu liegen kommt, wobei der O-Ring bevorzugt unmittelbar neben der ersten Seitenfläche S1 liegt. Beispielsweise weist der Bolzen 12 somit an einem Ende das Außengewinde 18 auf und am anderen Ende den O-Ring. Der Bolzen 12 kann beispielsweise eine Nut aufweisen, in welcher der O-Ring eingesetzt ist. Der O-Ring wird beim Einschrauben des Bolzens 12 in das Transversalloch 13 gequetscht und erschwert das Öffnen. Dadurch kann sich der Bolzen 12 beispielsweise durch Vibrationen nicht von selbst lockern.

Um ein Innengewinde 18' im Transversalloch 13 zu bilden, kann dieses beispielsweise bei der Herstellung des Transversalloches 13 mitgeschnitten werden, sodass das Innengewinde 18' im Transversalloch 13 aus demselben Material besteht wie der Körper 11. Bevorzugt wird jedoch, wenn eine Mutter mit Innengewinde 18` in das Transversalloch 13 eingesetzt und bevorzugt auch eingeklebt ist. Dadurch kann für das Gewinde ein anderes Material als für den Körper 11 eingesetzt werden. Zur Herstellung dieser Ausführungsform kann das Transversalloch 13 im Bereich des herzustellenden Gewindes einen größeren Durchmesser aufweisen und die Mutter kann danach in diesen Bereich mit größerem Durchmesser eingesetzt bzw. eingeklebt werden.

Wie dargestellt durchsetzt das Transversalloch 13 sowohl die erste Seite S1 als auch die zweite Seite S2, sodass der Bolzen 12 eine derartige Länge haben kann, dass die Außenflächen des Bolzens 12 im Wesentlichen an der ersten bzw. zweiten Seitenfläche S1, S2 zu liegen kommen. In anderen Worten kann der Bolzen 12 gleich lang wie das Transversalloch 13 sein. Wenn der zweite Abschnitt A2 als Sackloch ausgebildet ist, könnte der Bolzen 12 auch entsprechend kürzer ausgestaltet sein, um vollständig in das Transversalloch 13 eingeführt zu werden und trotzdem mit einer Außenfläche bündig an der ersten Seitenfläche S1 anzuliegen. In beiden Fällen weist die an der ersten Seitenfläche S1 zu liegen kommende Außenfläche des Bolzens 12 zudem bevorzugt eine Vertiefung 19 auf, in die ein Werkzeug eingeführt werden kann, um den Bolzen 12 in das Transversalloch 13 zu schrauben. Diese stirnseitige Vertiefung 19 hat beispielsweise eine Sechskantform zum Zusammenwirken mit einem Inbusschlüssel oder eine Schlitz- oder Kreuzform zum Zusammenwirken mit einem Schraubenzieher.

In einer weiteren Ausführungsform könnte der Bolzen 12 auch länger als das Transversalloch 13 sein. Der Bolzen 12 könnte hier ein Gewinde an jener Stelle aufweisen, die im montierten Zustand des Bolzens 12 außerhalb des Transversalloches 13 bzw. außerhalb des Körpers 11 liegt, sodass eine Mutter auf dieses Gewinde geschraubt werden könnte, um den Bolzen 12 zu arretieren. Wenn das Transversalloch 13 sowohl die erste Seite S1 als auch die zweite Seite S2 durchsetzt, könnte der Bolzen 12 zwei außenliegende Gewinde aufweisen und der Bolzen 12 beidseitig mit Muttern fixiert werden.

Damit das Transversalloch 13 keine lokale Schwächung im Körper 11 herbeiführt, kann der Körper 11 im Bereich des Transversalloches 13 eine entsprechende Verstärkung aufweisen. Die Verstärkung kann wie in Figur 2a dargestellt als lokale Verdickung des Körpers 11 in der ersten Richtung R1 ausgebildet sein, d.h. der Körper 11 weist im Bereich des Transversalloches 13 eine größere Dicke D2 auf als an den anderen Stellen. Die Dicke D2 beträgt bevorzugt 15 mm bis 25 mm. Diese Verdickung bildet im Körper 11 beispielsweise eine zylindrische Form aus, d.h. bildet einen Zylinderabschnitt auf der Vorderseite V und/oder der Rückseite R aus. Die Verstärkung ermöglicht beispielsweise eine Mindestwandstärke von 3 mm bis 10 mm zwischen Transversalloch 13 und Vorderseite V und/oder Rückseite R. Alternativ oder zusätzlich zu einer Verdickung könnte die Verstärkung auch durch eine lokale Materialhärtung des Körpers 11 oder durch einen verstärkenden Klebestreifen, der über dem Transversalloch 13 auf die Vorderseite V und/oder die Rückseite R geklebt wird, gebildet sein.

Mögliche Verwendungen des erfindungsgemäßen Beschlagteils 10 werden nun anhand der Figuren 3a - 5b erläutert.

Die Figuren 3a und 3b zeigen eine Ausführungsform, bei der die Brücke 7 durch zwei nebeneinander verlaufende Seile 20 gebildet wird, sodass die Brücke als Seilbrücke bezeichnet wird. Die Seilbrücke könnte aber auch nur ein Seil oder mehr als zwei Seile umfassen. Gleich wie bei Figur 1 wird die Brücke 7 fixiert, indem ein Ende der Seile 20 zu einem Stopperknoten 21 verknotet wird. Der Bolzen 12 kann vor oder nach dem Formen des Stopperknotens 21 in das Transversalloch 13 eingeführt werden. In diesem Fall dient der Bolzen 12 dazu, das Brückenloch 16 zu verkleinern, was die Sicherheit des Beschlagteils 10 erhöht, da der Stopperknoten 21 bei Belastung nicht so leicht durch das Brückenloch 16 rutschen kann.

Auch die Figuren 4a und 4b zeigen eine Ausführungsform, bei der die Brücke 7 durch zwei nebeneinander verlaufende Seile 20 gebildet wird, sodass die Brücke als Seilbrücke bezeichnet werden kann. Es könnte jedoch auch nur ein Seil oder mehr als zwei Seile eingesetzt werden. Im Gegensatz zur Ausführungsform der Figuren 3a und 3b ist das Ende der Brücke 7 jedoch derart verarbeitet, beispielsweise mit den dargestellten Nähten 22 vernäht, dass sich eine permanente Schlaufe 23 ausbildet. Um diese Brücke 7 zu fixieren, wird der Bolzen 12 zuerst durch den ersten Abschnitt A1 des Transversalloches 13 geführt, dann durch die im Brückenloch 16 befindliche Schlaufe 23, und dann durch den zweiten Abschnitt A2. Abschließend kann der Bolzen 12 arretiert werden, indem beispielsweise das letzte Stück des Bolzens 12 in den zweiten Abschnitt geschraubt wird, z.B. indem man das gegenüberliegende Ende des Bolzens 12 mit einem in die Vertiefung 19 eingeführten Werkzeug dreht.

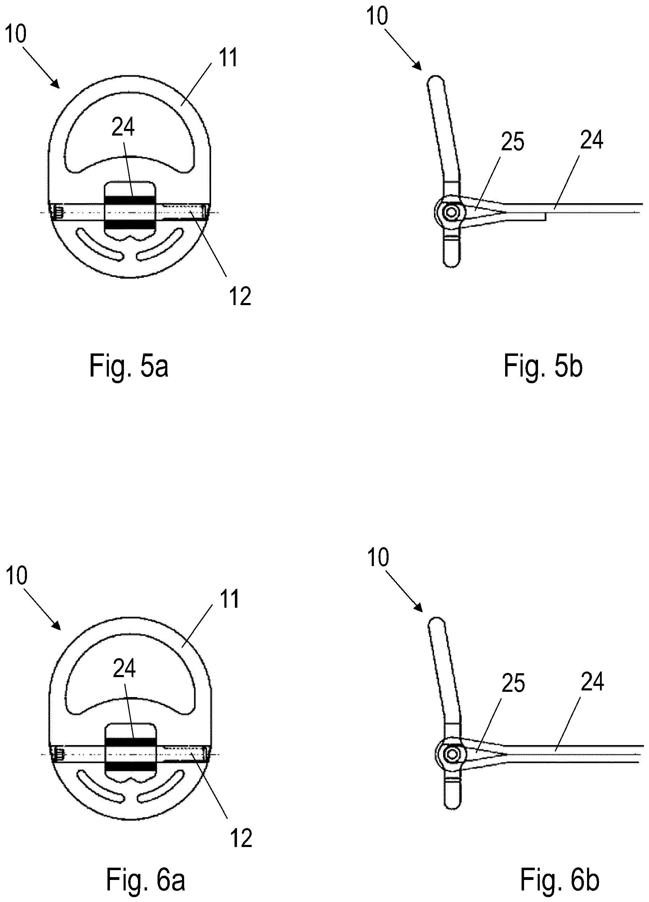

Die Figuren 5a und 5b bzw. 6a und 6b zeigen eine Brücke 7, die aus Gurtband ausgeführt ist, d.h. nicht als Seilbrücke. Das Gurtband der Figuren 5a und 5b umfasst ein Band 24, das über dessen Länge einfach geführt und an seinem Ende eine permanente Schlaufe 25 aufweist, die beispielsweise durch Vernähen gebildet ist. Alternativ dazu, wie in den Figuren 6a und 6b gezeigt, könnte das Band 24 über dessen Länge, d.h. zwischen den beiden Enden, doppelt geführt sein und im Faltabschnitt eine permanente Schlaufe 25 aufweisen. Die außerhalb der Schlaufe 25 aufeinanderliegenden Gurtteile können beispielsweise permanent miteinander verbunden sein, z.B. durch Verkleben oder Vernähen.

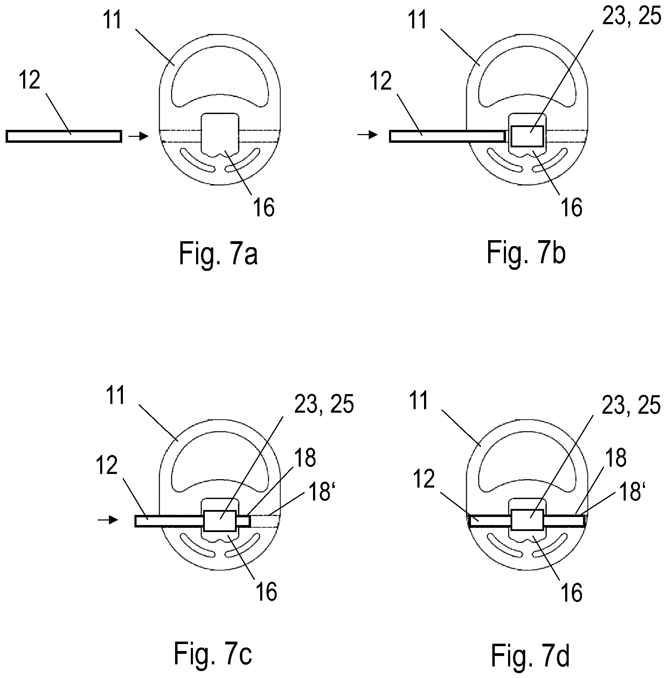

Die Figuren 7a bis 7d zeigen, wie die Brücke 7 am Beschlagteil 10 befestigt wird, wenn das Ende der Brücke 7 zu einer Schlaufe 23, 25 geformt ist, wie in den Ausführungsformen der Figuren 4a bis 6b gezeigt. Eingangs wird der Bolzen 12 zu der ersten Seite S1 des Transversalloches 13 geführt. Gemäß Figur 7b wird der Bolzen 12 in den ersten Abschnitt A1 des Transversalloches 13 geführt und bis zum Brückenloch 16 geschoben. Zu diesem Zeitpunkt oder bereits davor wird ein zu einer Schlaufe 23, 25 geformtes Ende der Brücke 7 durch das Brückenloch 16 geführt und der Bolzen 12 wird durch die Schlaufe 23, 25 geschoben, wie in Figur 7c dargestellt. Nun wird der Bolzen 12 weiter durch das Transversalloch 13 geführt, sodass er nun auch den zweiten Abschnitt A2 des Transversalloches 13 durchsetzt. Zu diesem Zeitpunkt kann das Außengewinde 18 des Bolzens 12 in das Innengewinde 18' des Transversalloches 13 eingreifen. Um den Bolzen 12 weiter durch das Transversalloch 13 zu führen, wird der Bolzen 12 gedreht, um das Außengewinde 18 des Bolzens entlang des Innengewindes 18' des Transversalloches zu führen. Diese Drehbewegung bzw. Transversalbewegung wird so lange durchgeführt, bis sich der Bolzen 12 vollständig im Transversalloch 13 befindet, wie in Figur 7d dargestellt ist.

Wenn die Brücke 7 keine Schlaufe 23, 25 umfasst, sondern mittels eines Stopperknotens am Beschlagteil 10 gehalten werden soll, könnte der Bolzen auch zuerst vollständig in das Transversalloch 13 geführt werden, wonach die Brücke 7 durch den verbleibenden Spalt zwischen Brückenloch 16 und Bolzen geführt wird. Danach wird der Stopperknoten auf der Brücke 7 geformt, und das durch den Bolzen 12 verkleinerte Brückenloch 16 verhindert den Durchtritt des Stopperknotens.

In allen vorgenannten Ausführungsformen ist bevorzugt, wenn der erfindungsgemäße Gurt zwei der Beschlagteile 10 und zwei Beinschlaufen 3 aufweist, wobei jedes der Beschlagteile 10 eine andere Beinschlaufe 3 mit einem weiteren Gurtunterelement verbindet, beispielsweise mit dem Hüftgurt 2. Unabhängig davon ist bevorzugt, wenn die Beschlagteile 10 im angelegten Zustand des Gurtes symmetrisch vorliegen, sodass die Brücke 7 zwischen den Beschlagteilen 10 montiert werden kann, analog zur Ausführungsform der Figur 1.

## Patentansprüche

1. Gurt zur Personenabsturzsicherung umfassend ein Beschlagteil (10) und zumindest ein erstes und ein zweites körperteilumgreifendes Gurtunterelement, wobei das Beschlagteil (10) eine Vorderseite (V) und eine von der Vorderseite (V) beabstandete Rückseite (R) aufweist,
wobei das Beschlagteil (10) einen einstückig ausgebildeten Körper (11) und einen Bolzen (12) umfasst, wobei der Körper (11) eine erste Öffnung (14) und gegebenenfalls eine zweite Öffnung (15) zur Verbindung des Beschlagteils (10) mit dem ersten Gurtunterelement und zur Verbindung des Beschlagteils (10) mit dem zweiten Gurtunterelement, ein Brückenloch (16) für eine flexible Brücke (7) und gegebenenfalls eine dritte Öffnung (17) zur Verbindung mit einem Anschlagpunkt aufweist,
wobei die erste Öffnung (14), das Brückenloch (16) und gegebenenfalls die dritte Öffnung (17) das Beschlagteil (10) jeweils in eine erste Richtung (R1) durchsetzen, welche von der Vorderseite (V) zur Rückseite (R) verläuft, und gesehen in der ersten Richtung (R1) vollständig innerhalb der Vorderseite (V) bzw. Rückseite (R) liegen,
**dadurch gekennzeichnet, dass**
der Körper (11) des Beschlagteils (10) ferner ein Transversalloch (13) aufweist, welches in einer zweiten Richtung (R2) normal zur ersten Richtung (R1) verläuft, und in einem vorbestimmten Abstand zur Vorderseite (V) und zur Rückseite (R) angeordnet ist,
wobei ein erster Abschnitt (A1) des Transversalloches (13) von einer ersten Seitenfläche (S1) des Körpers (11) des Beschlagteils (10) bis zum Brückenloch (16) verläuft und ein zweiter Abschnitt (A2) des Transversalloches (13) in Verlängerung des ersten Abschnittes (A2) ausgehend vom Brückenloch (16) in Richtung einer der ersten Seitenfläche (S1) gegenüberliegenden zweiten Seitenfläche (S2) des Körpers (11) des Beschlagteils (10) verläuft,
wobei der Bolzen (12) in das Transversalloch (13) führbar und in diesem arretierbar ist, um einen Steg (S) innerhalb des Brückenloches (16) zu bilden.

2. Gurt nach Anspruch 1, wobei der zweite Abschnitt (A2) des Transversalloches (13) vom Brückenloch (16) bis zur zweiten Seitenfläche (S2) verläuft und die zweite Seitenfläche (S2) durchsetzt.

3. Gurt nach Anspruch 1, wobei der zweite Abschnitt (A2) des Transversalloches (13) ein Sackloch ist.

4. Gurt nach einem der Ansprüche 1 bis 3, wobei zumindest der zweite Abschnitt (A2) des Transversalloches (13) mit einem Innengewinde (18') versehen ist und der Bolzen (12) ein gegengleiches Außengewinde (18) aufweist.

5. Gurt nach einem der Ansprüche 1 bis 4, wobei der Körper (11) eine Dicke (D), gemessen von der Vorderseite (V) zur Rückseite (R) außerhalb einer lokalen Verstärkung für das Transversalloch (13), von 6 mm bis 14 mm, bevorzugt von 8 mm bis 10 mm, aufweist.

6. Gurt nach einem der Ansprüche 1 bis 5, wobei das Transversalloch (13) einen Innendurchmesser von 4 mm bis 10 mm, bevorzugt von 6 mm bis 8 mm, aufweist.

7. Gurt nach einem der Ansprüche 1 bis 6, wobei das Beschlagteil (10) im Bereich des Transversalloches (13) eine Verstärkung aufweist.

8. Gurt nach Anspruch 7, wobei die Verstärkung durch eine lokale Erhöhung der Dicke (D2) gebildet ist, gemessen in der ersten Richtung (R1), wobei die Dicke (D2) im Bereich des Transversalloches (13) bevorzugt 15 mm bis 25 mm beträgt.

9. Gurt nach einem der Ansprüche 1 bis 8, wobei der Bolzen (12) im Wesentlichen bündig mit der ersten Seitenfläche (S1) abschließt, wenn dieser vollständig in das Transversalloch (13) eingeführt ist, und wobei der Bolzen (12) bevorzugt eine stirnseitige Vertiefung (19) für den Angriff eines Werkzeuges aufweist.

10. Gurt nach einem der Ansprüche 1 bis 9, wobei das erste Gurtunterelement ein Hüftgurt (2) ist und das zweite Gurtunterelement eine Beinschlaufe (3) ist, wobei der Gurt bevorzugt eine weitere Beinschlaufe und ein weiteres Beschlagteil umfasst, welches den Hüftgurt (2) mit der weiteren Beinschlaufe verbindet, wobei das weitere Beschlagteil besonders bevorzugt gleich wie das erstgenannte Beschlagteil ausgeführt ist.

11. Gurt nach einem der Ansprüche 1 bis 10, ferner umfassend die Brücke (7), wobei die Brücke (7) eine Seilbrücke ist und ein Ende der Seilbrücke durch das Brückenloch (16) geführt und zu einem Stopperknoten (21) verknotet ist, wobei der Bolzen (12) durch das Transversalloch (13) geführt ist und den Stopperknoten (21) daran hindert, das Brückenloch (16) zu durchsetzen.

12. Gurt nach einem der Ansprüche 1 bis 10, ferner umfassend die Brücke (7), wobei die Brücke (7) eine Seilbrücke ist und ein Ende der Seilbrücke permanent als Schlaufe (23) ausgebildet ist, bevorzugt durch Zurückbiegen und Vernähen eines Endes der Seilbrücke, wobei der Bolzen (12) durch die Schlaufe (23) und das Transversalloch (13) geführt ist.

13. Gurt nach einem der Ansprüche 1 bis 10, ferner umfassend die Brücke (7), wobei die Brücke (7) als Gurtband ausgebildet ist und ein Ende des Gurtbandes permanent als Schlaufe (25) ausgebildet ist, wobei die Schlaufe durch Zurückbiegen und Vernähen eines Endes eines einzeln geführten Gurtes ausgebildet ist.

14. Gurt nach einem der Ansprüche 1 bis 10, ferner umfassend die Brücke (7), wobei die Brücke (7) als Gurtband ausgebildet ist und ein Ende des Gurtbandes permanent als Schlaufe (25) ausgebildet ist, bevorzugt im Faltbereich eines einstückigen, doppelt geführten Gurtes (24), wobei der Bolzen (12) durch die Schlaufe (25) und das Transversalloch (13) geführt ist.

15. Gurt nach einem der Ansprüche 1 bis 14, wobei die erste Öffnung (14) und die zweite Öffnung (15) getrennt voneinander ausgeführt sind, wobei ein erstes Band (6) des Hüftgurts (2) durch die erste Öffnung (14) und ein zweites Band (6) der Beinschlaufe (3) durch die zweite Öffnung (15) geführt ist.

## Claims

1. A belt for protecting a person against falling, comprising a connector (10) and at least a first and a second body part-encompassing belt sub-element, wherein the connector (10) has a front side (V) and a rear side (R) spaced from the front side (V),
wherein the connector (10) comprises an integrally formed body (11) and a bolt (12),
wherein the body (11) has a first opening (14) and optionally a second opening (15) for connecting the connector (10) to the first belt sub-element and for connecting the connector (10) to the second belt sub-element, a bridge hole (16) for a flexible bridge (7) and optionally a third opening (17) for connection to an attachment point,
wherein the first opening (14), the bridge hole (16) and optionally the third opening (17) each pass through the connector (10) in a first direction (R1), which extends from the front side (V) to the rear side (R), and lie completely within the front side (V) or rear side (R) when viewed in the first direction (R1),
**characterised in that**
the body (11) of the connector (10) further comprises a transversal hole (13), which extends in a second direction (R2) perpendicular to the first direction (R1) and is arranged at a predetermined distance from the front side (V) and the rear side (R),
wherein a first section (A1) of the transversal hole (13) extends from a first lateral surface (S1) of the body (11) of the connector (10) to the bridge hole (16) and a second section (A2) of the transversal hole (13) extends in extension of the first section (A2) starting from the bridge hole (16) in the direction of a second lateral surface (S2) of the body (11) of the connector (10), opposite to the first lateral surface (S1),
wherein the bolt (12) is guidable into the transversal hole (13) and lockable therein to form a web (S) within the bridge hole (16).

2. The belt according to claim 1, wherein the second section (A2) of the transversal hole (13) extends from the bridge hole (16) to the second lateral surface (S2) and passes through the second lateral surface (S2).

3. The belt according to claim 1, wherein the second section (A2) of the transversal hole (13) is a blind hole.

4. The belt according to of claims 1 to 3, wherein at least the second section (A2) of the transversal hole (13) is provided with an internal thread (18') and the bolt (12) has a matching external thread (18).

5. The belt according to any of claims 1 to 4, wherein the body (11) has a thickness (D), measured from the front side (V) to the rear side (R) outside of a local reinforcement for the transversal hole (13), of 6 mm to 14 mm, preferably of 8 mm to 10 mm.

6. The belt according to any of claims 1 to 5, wherein the transversal hole (13) has an inner diameter of 4 mm to 10 mm, preferably of 6 mm to 8 mm.

7. The belt according to any of claims 1 to 6, wherein the connector (10) has a reinforcement in the region of the transversal hole (13).

8. The belt according to claim 7, wherein the reinforcement is formed by a local increase in thickness (D2), measured in the first direction (R1), wherein the thickness (D2) in the region of the transversal hole (13) is preferably 15 mm to 25 mm.

9. The belt according to any of claims 1 to 8, wherein the bolt (12) is substantially flush with the first lateral surface (S1) when it is fully inserted into the transversal hole (13), and wherein the bolt (12) preferably has a front-face recess (19) for engagement by a tool.

10. The belt according to any of claims 1 to 9, wherein the first belt sub-element is a waist belt (2) and the second belt sub-element is a leg loop (3), wherein the belt preferably comprises a further leg loop and a further connector, which connects the waist belt (2) to the further leg loop, wherein the further connector is particularly preferably configured in the same way as the connector mentioned first.

11. The belt according to any of claims 1 to 10, further comprising the bridge (7), wherein the bridge (7) is a rope bridge and one end of the rope bridge is guided through the bridge hole (16) and knotted to form a stopper knot (21), wherein the bolt (12) is guided through the transversal hole (13) and prevents the stopper knot (21) from passing through the bridge hole (16).

12. The belt according to any of claims 1 to 10, further comprising the bridge (7), wherein the bridge (7) is a rope bridge and one end of the rope bridge is permanently configured as a loop (23), preferably by bending back and suturing one end of the rope bridge, wherein the bolt (12) is guided through the loop (23) and the transversal hole (13).

13. The belt according to any of claims 1 to 10, further comprising the bridge (7), wherein the bridge (7) is configured as a belt strap and one end of the belt strap is permanently configured as a loop (25), wherein the loop is configured by bending back and suturing an end of an individually guided belt.

14. The belt according to any of claims 1 to 10, further comprising the bridge (7), wherein the bridge (7) is configured as a belt strap and one end of the belt strap is permanently configured as a loop (25), preferably in the folding area of integral and doubleguided belt (24), wherein the bolt (12) is guided through the loop (25) and the transversal hole (13).

15. The belt according to any of claims 1 to 14, wherein the first opening (14) and the second opening (15) are configured separately from one other, wherein a first strap (6) of the waist belt (2) is guided through the first opening (14) and a second strap (6) of the leg loop (3) is guided through the second opening (15).

## Revendications

1. Ceinture de protection personnelle contre les chutes avec un connecteur (10) et au moins un premier et un deuxième sous-élément de ceinture entourant une partie du corps, le connecteur (10) comportant une face avant (V) et une face arrière (R) distante de la face avant (V),
dans laquelle le connecteur (10) comprend un corps (11) formé d'une pièce et un boulon (12), le corps (11) présentant une première ouverture (14) et éventuellement une deuxième ouverture (15) pour relier le connecteur (10) avec le premier sous-élément de ceinture et pour relier le connecteur (10) avec le deuxième sous-élément de ceinture, un trou de pontet (16) pour un pontet flexible (7) et éventuellement une troisième ouverture (17) pour faire la liaison avec un point d'ancrage,
dans laquelle la première ouverture (14), le trou de pontet (16) et éventuellement la troisième ouverture (17) traversent le connecteur dans une première direction (R1) qui va de la face avant (V) à la face arrière (R) et, vu dans la première direction (R1), sont situées intégralement dans la face avant (V) et la face arrière (R),
**caractérisée en ce que**
le corps (11) du connecteur (10) présente en outre un orifice transversal (13) qui court dans une deuxième direction (R2) perpendiculaire à la première direction (R1) et est situé à une distance prédéfinie de la face avant (V) et de la face arrière (R),
une première section (A1) de l'orifice transversal (13) courant d'une première face latérale (S1) du corps (11) du connecteur (10) jusqu'au trou de pontet (16) et une deuxième section (A2) de l'orifice transversal (13) courant dans le prolongement de la première section (A2) à partir du trou de pontet (16) en direction d'une deuxième face latérale (S2) du corps (11) du connecteur (10) opposée à la première face latérale (S1),
le boulon (12) pouvant être guidé dans l'orifice transversal (13) et verrouillé dans celui-ci pour former une traverse (S) à l'intérieur du trou de pontet (16).

2. Ceinture selon la revendication 1, dans laquelle la deuxième section (A2) de l'orifice transversale (13) court du trou de pontet (16) jusqu'à la deuxième face latérale (S2) et traverse la deuxième face latérale (S2).

3. Ceinture selon la revendication 1, dans laquelle la deuxième section (A2) de l'orifice transversale (13) est un trou borgne.

4. Ceinture selon une des revendications 1 à 3, dans laquelle au moins la deuxième section (A2) de l'orifice transversale (13) est dotée d'un filetage intérieur (18') et le boulon (12) présente un filetage extérieur complémentaire (18).

5. Ceinture selon une des revendications 1 à 4, dans laquelle le corps (11) présente une épaisseur (D) mesurée de la face avant (V) à la face arrière (R), en dehors d'un renforcement local pour l'orifice transversal (13), de 6 mm à 14 mm, de préférence de 8 mm à 10 mm.

6. Ceinture selon une des revendications 1 à 5, dans laquelle l'orifice transversal (13) présente un diamètre intérieur de 4 mm à 10 mm, de préférence de 6 mm à 8 mm.

7. Ceinture selon une des revendications 1 à 6, dans laquelle le connecteur (10) présente un renforcement dans la région de l'orifice transversal (13).

8. Ceinture selon la revendication 7, dans laquelle le renforcement est formé par une augmentation locale de l'épaisseur (D2) mesurée dans la première direction (R1), cette épaisseur (D2) étant de préférence de 15 mm à 25 mm dans la région de l'orifice transversal (13).

9. Ceinture selon une des revendications 1 à 8, dans laquelle le boulon (12) affleure sensiblement la première face latérale (S1) quand celui-ci est entièrement inséré dans l'orifice transversal (13), et dans laquelle le boulon (12) présente de préférence un renfoncement frontal (19) pour la prise d'un outil.

10. Ceinture selon une des revendications 1 à 9, dans laquelle le premier sous-élément de ceinture est une ceinture ventrale (2) et le deuxième sous-élément de ceinture est un tour de cuisse (3), laquelle ceinture comprend de préférence un autre tour de cuisse et un autre connecteur qui relie la ceinture ventrale (2) à l'autre tour de cuisse, cet autre connecteur étant réalisé de façon particulièrement préférée comme le connecteur mentionné en premier.

11. Ceinture selon une des revendications 1 à 10, comprenant en outre le pontet (7), ce pontet (7) étant un pontet de corde et une extrémité de ce pontet de corde étant conduite à travers le trou de pontet (16) et nouée à un noeud d'arrêt (21), le boulon (12) étant guidé à travers l'orifice transversal (13) et empêchant le noeud d'arrêt (21) de passer à travers le trou de pontet (16).

12. Ceinture selon une des revendications 1 à 10, comprenant en outre le pontet (7), ce pontet (7) étant un pontet de corde et une extrémité de ce pontet de corde étant formée de façon permanente comme une boucle (23), de préférence en repliant et en cousant une extrémité du pontet de corde, le boulon (12) étant guidé à travers la boucle (23) et l'orifice transversal (13).

13. Ceinture selon une des revendications 1 à 10, comprenant en outre le pontet (7), ce pontet (7) étant formé comme une sangle et une extrémité de cette sangle étant formée de façon permanente comme une boucle (25), cette boucle étant formée en repliant et en cousant une extrémité d'une ceinture guidée séparément.

14. Ceinture selon une des revendications 1 à 10, comprenant en outre le pontet (7), ce pontet (7) étant formé comme une sangle et une extrémité de cette sangle étant formée de façon permanente comme une boucle (25), de préférence dans la zone de pliage d'une ceinture (24) d'un seul tenant guidée en double, le boulon (12) étant guidé à travers la boucle (25) et l'orifice transversal (13).

15. Ceinture selon une des revendications 1 à 14, dans laquelle la première ouverture (14) et la deuxième ouverture (15) sont séparées l'une de l'autre, une première sangle (6) de la ceinture ventrale (2) étant guidée à travers la première ouverture (14) et une deuxième sangle (6) du tour de cuisse (3) à travers la deuxième ouverture (15).
